# EUROPÄISCHE PATENTANMELDUNG

(11) **EP 1 935 766 A2**
(43) Veröffentlichungstag der Anmeldung: **25.06.2008**
(21) Anmeldenummer: 07023622.9
(22) Anmeldetag: 06.12.2007
(51) Int. Cl.: B62D 53/08, A01B 35/00, A01B 63/00, A01B 63/22, A01B 73/04

(54) **Anhängesystem eines gezogenen landwirtschaftlichen Gerätes**

(30) Priorität: 22.12.2006 DE 102006061307
(71) Anmelder: Amazonen-Werke H. Dreyer GmbH & Co. KG, 49205 Hasbergen (DE)
(72) Erfinder: Dreyer, Justus, Dr., 49076 Osanbrück (DE); Pokriefke, Michael, 27798 Hude (DE); Sosnicki, Jürgen, 04205 Leipzig (DE); Tiessen, Reimer Uwe, 26135 Oldenburg (DE); Thielicke, René, Dr., 04420 Markranstädt (DE)

(57) **Zusammenfassung**

Anhängesystem eines gezogenen landwirtschaftlichen Gerätes (2), insbesondere eines Bodenbearbeitungsgerätes und/oder einer Verteilmaschine, mit einem Zugdeichsel (3) einer Anhängekupplung (4) zur Ankupplung an die Zugvorrichtung eines Zugfahrzeuges, Rahmen und Laufräder (5) aufweisenden Zwischenfahrwerk (1), wobei zwischen der Anhängekupplung und den Laufrädern auf dem Rahmen des Zwischenfahrwerkes eine Zugkupplung (6) zur Ankupplung der Anhängevorrichtung des landwirtschaftlichen Gerätes angeordnet ist. Um ein Anhängesystem für gezogene landwirtschaftliche Systeme zu schaffen, die eine wesentlich verbesserte Wendigkeit, sowie das Ziel landwirtschaftliche Geräte mit wesentlich größerem Gesamtgewicht im Hinblick auf die zulässige Stützlast, wobei die Anhängevorrichtung (16,17) des Gerätes zwischen der Kupplungsvorrichtung an die Zugkupplung und dem Rahmen (8) des Gerätes ein Hubgestänge mit einem motorischen Stellelement (15) aufweist.

## Beschreibung

Die Erfindung betrifft ein Anhängesystem eines gezogenen landwirtschaftlichen Gerätes.

Derartige landwirtschaftliche Anhängesysteme für gezogene landwirtschaftliche Geräte sind in vielfältiger Weise bekannt.

Durch die DE 20 2005 008 132 U1 ist ein multifunktionales Anhängersystem bekannt, welches einen einachsigen an eine Schlepperkupplung ankuppelbaren Anhänger aufweist, der mit einer Sattelkupplung versehen ist. Über diese Sattelkupplung sind Sattelanhänger zu kuppeln, so dass Sattelanhänger mit diesem als einachsigen Anhänger ausgebildeten Vorderwagen von einem normalen Ackerschlepper gezogen werden können und nicht von einer üblichen Sattelzugmaschine gezogen werden müssen. Dieses multifunktionale Anhängersystem lässt sich jedoch nicht ohne weiteres für ein landwirtschaftliches Gerät, welches als Bodenbearbeitungsgerät oder Verteilmaschine ausgebildet ist, nutzen.

Anhängesysteme eines gezogenen landwirtschaftlichen Gerätes weisen üblicherweise eine Zugdeichsel auf, die an die Anhängerkupplung eines Ackerschleppers anzukuppeln ist. Von diesem Ackerschlepper wird dann die Verteilmaschine über den Acker gezogen. Insbesondere bei gezogenen landwirtschaftlichen Geräten mit großer Arbeitsbreite, die aufgrund der Einklapptechnik auch eine erhebliche Länge aufweisen, ist nur eine geringe Wendigkeit mit einem verschlechterten Nachlauf gegeben. Darüber hinaus ist die Stützlast bei diesen bekannten Anhängesystemen begrenzt, so dass nur gezogene Geräte mit einem begrenzten Gesamtgewicht, insbesondere auf öffentlichen Straßen und Wegen gezogen werden dürfen.

Der Erfindung liegt die Aufgabe zugrunde, ein Anhängesystem für gezogene landwirtschaftliche Systeme zu schaffen, die eine wesentlich verbesserte Wendigkeit aufweisen sowie ein wesentlich größeres Gesamtgewicht im Hinblick auf die zulässige Stützlast zu lassen.

Diese Aufgabe wird erfindungsgemäß durch die Merkmale des Patentanspruches 1 gelöst. Infolge dieser Maßnahmen wird das gezogene landwirtschaftliche Gerät mit der Anhängevorrichtung auf das Zwischenfahrwerk abstützend angehängt, so dass somit über das Zwischenfahrwerk nur noch eine geringe Stützlast auf die Zugvorrichtung des Zugfahrzeuges einwirkt. Hierdurch ergibt sich eine wesentlich verbesserte Wendigkeit mit einem verringerten Nachlauf und einer geringeren Stützlast über die direkte Ankupplung des gezogenen landwirtschaftlichen Gerätes an das Zugfahrzeug für das gezogene Gerät. Die Stützlast auf die Koppelstelle am Zugfahrzeug lässt sich durch die geometrischen Verhältnisse bzgl. der Anordnung der Zugkupplung an dem Zwischenfahrwerk einstellen. Aufgrund der Ausbildung der Anhängevorrichtung des Gerätes zwischen der Kupplungsvorrichtung an die Zugkupplung und den Rahmen des Gerätes als Hubgestänge, welches ein motorisches Stellelement aufweist, kann das landwirtschaftliche Gerät in einfacher Weise auf seiner Vorderseite angehoben oder abgesenkt werden. Dies ist insbesondere vorteilhaft, wenn im vorderen Bereich des landwirtschaftlichen Gerätes Bodenbearbeitungswerkzeuge und/oder Säelemente angeordnet sind. Hierdurch lassen sich die Bodenbearbeitungswerkzeuge und Säelemente in den Boden bringen und aus dem Boden heraus heben.

In ähnlicher Weise lässt sich ein Anhängesystem gemäß des Anspruches 2 bei einem sogenannten Systemschlepper mit den gleichen vorgeschilderten Vorteilen verwirklichen.

Eine einfache Ausgestaltung der Kupplung der Anhängevorrichtung des Gerätes an dem Zwischenfahrwerk lässt sich dadurch verwirklichen, dass die Kupplung zur Ankupplung der Anhängevorrichtung des Gerätes als Kugelkopfkupplung ausgebildet ist.

Für viele Fälle ergibt sich eine vorteilhafte Verteilung der Stützlast durch das Zwischenfahrwerk sowohl auf die Laufräder des Zwischenfahrwerkes wie auch an der Zugvorrichtung des Zugfahrzeuges dadurch, dass die Zugkupplung auf dem Rahmen des Zwischenfahrwerkes in einem Abstandsverhältnis der Abstände zwischen Anhängekupplung und Zugkupplung zu Zugkupplung und Laufradachse der Laufräder des Zwischenfahrwerkes in etwa 1,5 : 1 beträgt.

In vorteilhafter Weise kann die Zugkupplung an dem Zwischenfahrwerk versetzbar sein, so dass das Abstandsverhältnis je nach Erfordernis in optimaler Weise einstellbar ist.

Eine einfache und stabile Ausgestaltung des Hubgestänges wird dadurch erreicht, dass das Hubgestänge mit zwei unteren beabstandet zueinander angeordneten Gelenken und einem oberen Gelenk am Rahmen des Gerätes angeordnet ist.

Eine einfache Ausbildung des Stellelementes für das Hubgestänge ergibt sich dadurch, dass das motorische Stellelement als Hydraulikzylinder ausgebildet ist.

Um in vorteilhafter Weise mit dem geschlossenen Anhängesystem auch auf öffentlichen Straßen und Wegen gemäß den gesetzlichen Vorschriften fahren zu dürfen, ist vorgesehen, dass die Kupplung zur Ankupplung der Anhängevorrichtung des Gerätes nicht werkzeuglos zur Trennung von Zwischenfahrwerk und/oder Zugfahrzeug einerseits und landwirtschaftlichem Gerät andererseits lösbar ist.

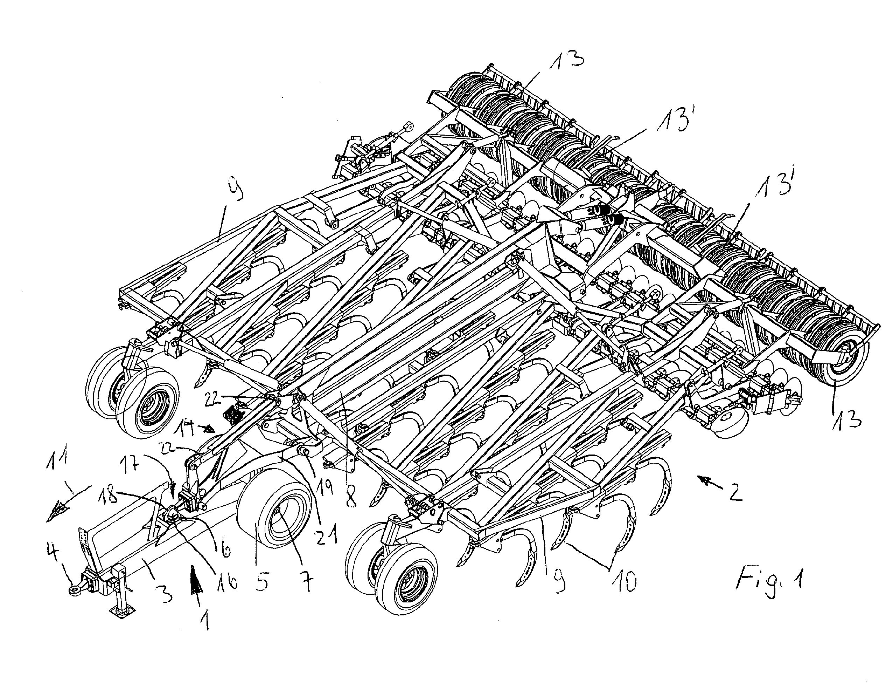

Weitere Einzelheiten der Erfindung sind der Beispielsbeschreibung und den Zeichnungen zu entnehmen. Hierbei zeigen
- Fig. 1: das Anhängesystem des gezogenen landwirtschaftlichen Gerätes in Arbeitsstellung und in perspektivischer Ansicht,

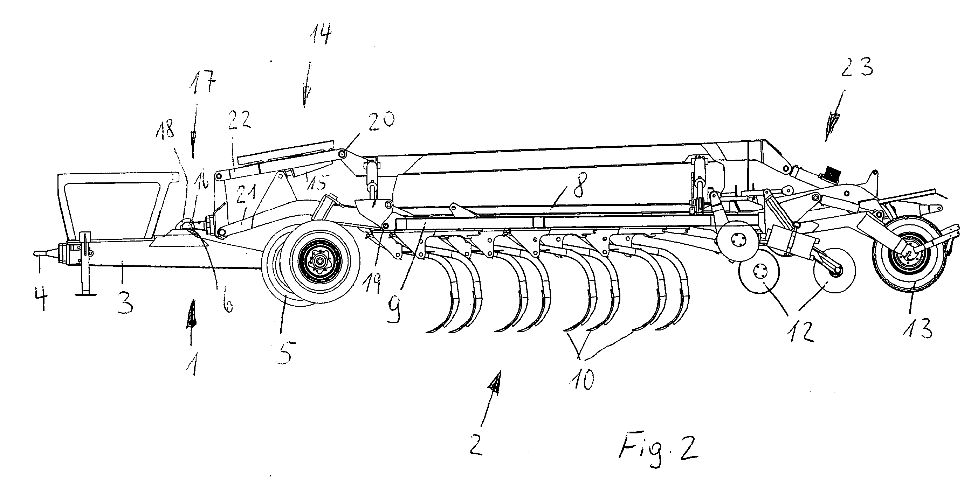

- Fig. 2: das Anhängesystem des gezogenen landwirtschaftlichen Gerätes in Arbeitsstellung und in Seitenansicht,

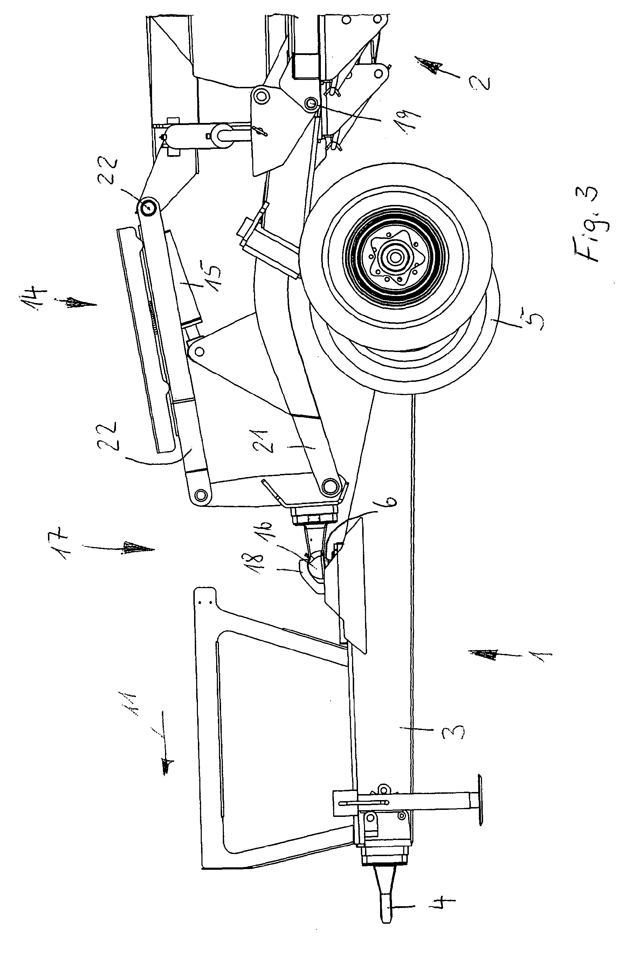

- Fig. 3: das Anhängesystem im Bereich des Zwischenfahrwerkes und der Anhängevorrichtung des gezogenen Gerätes in Seitenansicht und in vergrößertem Maßstab,
- Fig. 4: das Anhängesystem des gezogenen landwirtschaftlichen Gerätes in Vorgewendestellung und in Seitenansicht,
- Fig. 5: das Anhängesystem im Bereich des Zwischenfahrwerkes des gezogenen landwirtschaftlichen Gerätes in Vorgewendestellung und in Seitenansicht und im vergrößertem Maßstab,
- Fig. 6: das Anhängesystem des gezogenen landwirtschaftlichen Gerätes in Transportstellung und in Seitenansicht und
- Fig. 7: das Anhängesystem im Bereich des Zwischenfahrwerkes des gezogenen landwirtschaftlichen Gerätes in Transportstellung und in Seitenansicht und im vergrößertem Maßstab.

Das geschlossene Anhängesystem des landwirtschaftlichen Gerätes besteht aus dem Zwischenfahrwerk 1 und dem an dem Zwischenfahrwerk 1 angehängten Bodenbearbeitungsgerät 2. Anstelle des Bodenbearbeitungsgerätes 2 kann auch eine Verteilmaschine oder eine Kombination von beiden Geräten vorgesehen sein. Das Zwischenfahrwerk 1 weist eine Zugdeichsel 3 mit einer Anhängekupplung 4 zur Ankupplung an die Zugvorrichtung eines nicht dargestellten Zugfahrzeuges von der Zugdeichsel 3 gebildeten, einen Rahmen und Laufräder auf. Auf dem von der Zugdeichsel gebildeten Rahmen ist eine Zugkupplung 6 in Form eines Kugelkopfes angeordnet. Die Zugkupplung 6 ist auf dem Rahmen 3 des Zwischenfahrwerkes 1 in einem Abstandverhältnis der Abstände zwischen Anhängekupplung 4 und Zugkupplung 6 zu Zugkupplung 6 und Laufradachse 7 der Laufräder 5 des Zwischenfahrwerkes 1 von etwa 1,5 : 1 angeordnet. Die Zugkupplung 6 kann jedoch auch in anderen Abständen auf dem als Rahmen ausgebildeten Zugdeichsel 3 angeordnet werden, um andere Abstandsverhältnisse zu erreichen, falls dies gemäß eines Einsatzes erforderlich ist.

Das Bodenbearbeitungsgerät 2 weist einen Zentralrahmen 8 auf, an dem einschwenkbare Seitenrahmen 9 angeordnet sind. An diesen Seitenrahmen 9 sind als Zinken 10, schräg zur Fahrtrichtung 11 angestellte Scheiben 12 und Nachlaufwalze 13 ausgebildete Bodenbearbeitungswerkzeuge angeordnet. Ein Teil 13' der Nachlaufwalze 13 bildet das hintere Fahrwerk des Bodenbearbeitungsgerätes 2.

An dem Rahmen 8 des Bodenbearbeitungsgerätes 2 ist ein Hubgestänge 14 mit einem als Hydraulikzylinder 15 ausgebildeten motorischen Stellelement angeordnet. Auf der Vorderseite des Gestänges 14 ist eine Kupplungsvorrichtung 16 zur Kupplung des Gerätes 2 an die Zugkupplung 6, die auf dem Rahmen 3 des Zwischenfahrwerkes 1 angeordnet ist, befestigt. Die Kupplungsvorrichtung 16 und das Hubgestänge 14 bilden die Anhängevorrichtung 17 des Gerätes 2 an die Zugkupplung 6 des Zwischenfahrzeuges 1.

In Verbindung mit dem Kugelkopf 6, der auf dem Zwischenfahrwerk 1 angeordnet ist, und der Kupplung 16 zur Ankupplung der Anhängevorrichtung 17 des Gerätes 2 an den Zwischenrahmen 1 bildet somit eine Kugelkopfkupplung 16. Die Kupplung zur Ankupplung der Anhängevorrichtung 17 des Gerätes 2 ist nicht werkzeuglos lösbar, so dass Trennung von Zwischenfahrwerk 1 einerseits und landwirtschaftlichen Gerätes 2 andererseits nicht ohne weiteres lösbar. Die Nichtlösbarkeit wird durch das der Kugelkopfkupplung zuordneten als Sicherheitsbügel 18 ausgebildete Sicherungselement, welches nur mittels Werkzeug zu lösen ist, sichergestellt.

Das Hubgestänge 14 ist mit zwei unteren beabstandet zueinander angeordneten Gelenken 19 und einem oberen Gelenk 10 am Rahmen des Gerätes 2 angeordnet und weist einen Unterlenker 21 und einen Oberlenker 22 die mit dem besagten Gelenken 18, 19 ausgestattet sind, auf.

Das Bodenbearbeitungsgerät 2 stützt sich über Kupplungsvorrichtung 16 der Anhängevorrichtung 17 auf der Zugkupplung 6 des Zwischenfahrwerkes 1 ab. Hierdurch wird die von dem Gerät 2 erzeugte Stützlast, die letztendlich über die Anhängekupplung 4 auf die Zugkupplung des Zugfahrzeuges wirkt, erheblich verringert. Ein Großteil des Stützgewichtes wird dann von den Laufrädern 5 des Zwischenfahrwerkes 1 getragen.

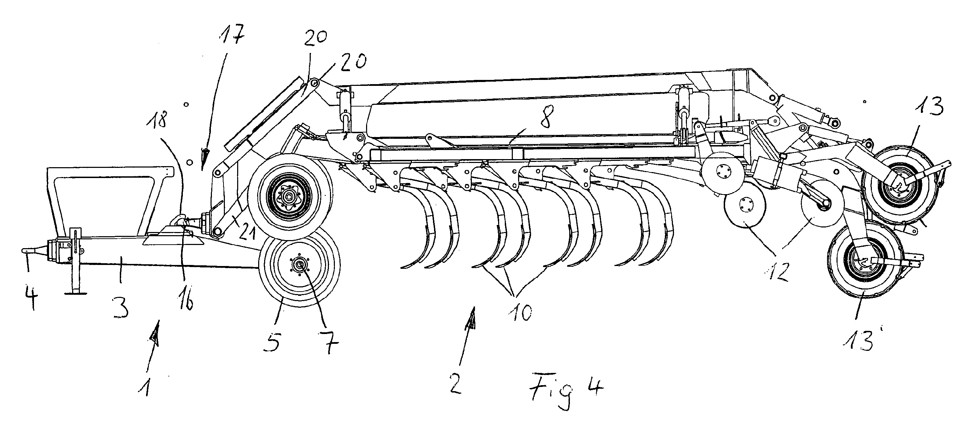

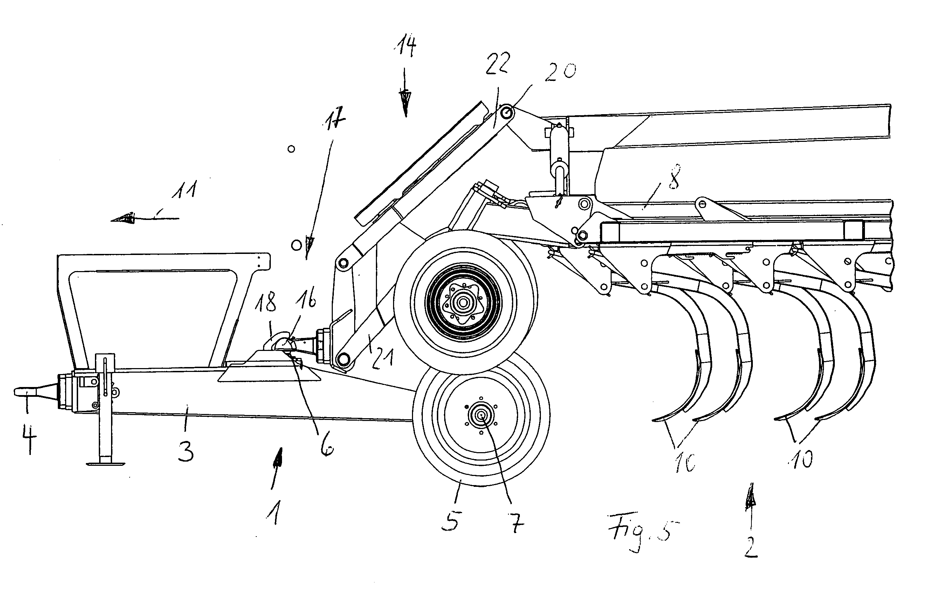

Mittels der Hubvorrichtung 14 lässt sich das Bodenbearbeitungsgerät 2 im vorderen Bereich anheben, wie die Fig. 4 und 5 zeigt. Um die in den Boden eingreifenden Werkzeuge 10, 12 und die auf der Bodenoberfläche ablaufenden und die Maschine in der Tiefe führenden Walzenelemente 13 insgesamt abheben zu können, hebt die Anhängevorrichtung 23 zusätzlich mit der hinteren Anhebevorrichtung das Gerät an. Ein Teil der Nachlaufwalze 13 bildet das hintere Fahrwerk 13'. Das vordere Fahrwerk wird von den Laufrädern 5 des Zwischenrahmens 1 gebildet. In dieser in Fig. 4 und 5 dargestellten Position wird das Gerät 2 am Feldende gewendet und nach dem Wendevorgang wird das Gerät 2 wieder über die vordere und hintere Hebevorrichtung 14, 23 abgesenkt.

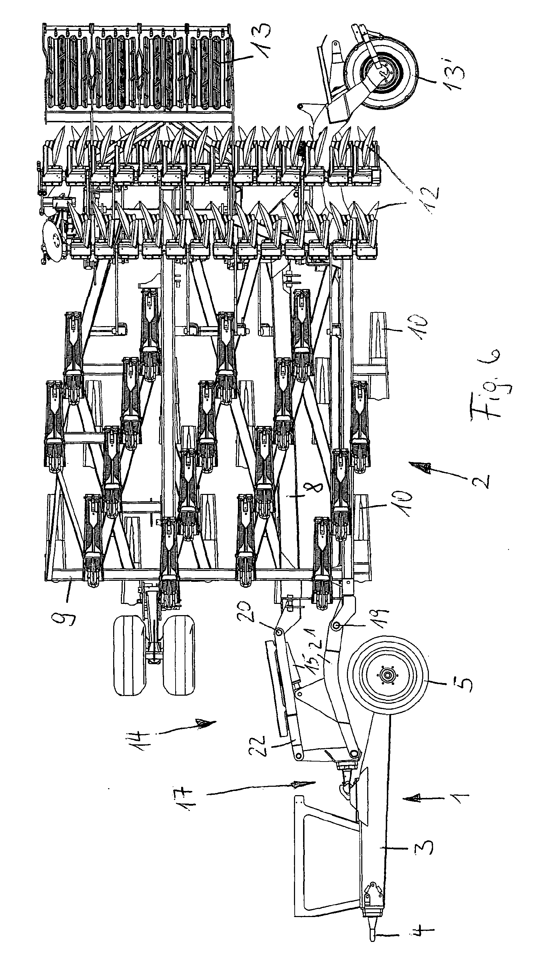

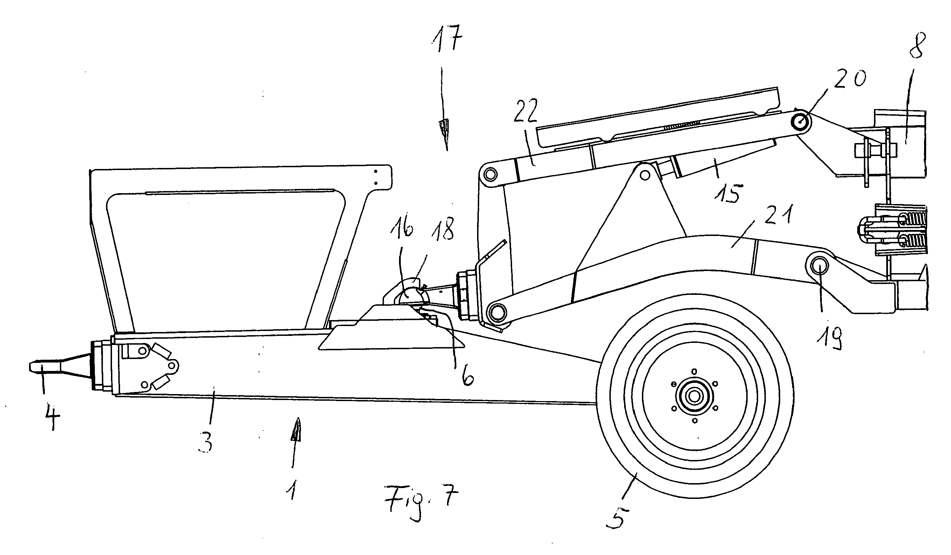

Um das Gerät in Transportstellung zu bringen, werden die Seitenteile 9 entsprechend der Fig. 6 und 7 eingeklappt, um eine möglichst geringe Schwerpunktlage zu erreichen, wird das Gerät über die vordere Anhängevorrichtung 14 und die hintere Hebevorrichtung 23 abgesenkt.

Durch die Ankupplung der Anhängevorrichtung 17 des gezogenen landwirtschaftlichen Gerätes 2 an die Zugkupplung 6 des Zwischenfahrzeuges 1 wird einerseits eine Verringerung der Stützlast auf die Zugvorrichtung des Zugfahrzeuges und andererseits eine bessere Wende- und Manövrierfähigkeit mit einem verbesserten Nachlauf andererseits erreicht.

Anstelle eines Zwischenrahmens 1 kann die Anhängevorrichtung 4 des landwirtschaftlichen Gerätes 2 an die Zugkupplung eines nicht dargestellten Systemfahrzeuges angekuppelt werden.

## Patentansprüche

1. Geschlossenes Anhängesystem eines gezogenen landwirtschaftlichen Gerätes (2), insbesondere eines Bodenbearbeitungsgerätes und/oder einer Verteilmaschine, mit einem Zugdeichsel (3) einer Anhängekupplung (4) zur Ankupplung an die Zugvorrichtung eines Zugfahrzeuges, Rahmen (3) und Laufräder (5) aufweisenden Zwischenfahrwerk (1), wobei zwischen der Anhängekupplung (4) und den Laufrädern (5) auf dem Rahmen (3) des Zwischenfahrwerkes (1) eine Zugkupplung (6) zur Ankupplung der Anhängevorrichtung (16,17) des landwirtschaftlichen Gerätes (2) angeordnet ist, wobei die Anhängevorrichtung (16,17) des Gerätes 2 zwischen der Kupplungsvorrichtung an die Zugkupplung (6) und dem Rahmen (8) des Gerätes (2) ein Hubgestänge (14) mit einem motorischen Stellelement (15) aufweist.

2. Anhängesystem eines gezogenen landwirtschaftlichen Gerätes, insbesondere eines Bodenbearbeitungsgerätes und/oder einer Verteilmaschine, zur Ankupplung des Gerätes mittels einer Anhängevorrichtung an die Zugvorrichtung eines Zugfahrzeuges, wobei zwischen der Vorderachse und Hinterachse des Zugfahrzeuges die Zugvorrichtung zur Ankupplung der Anhängevorrichtung des landwirtschaftlichen Gerätes angeordnet ist, wobei die Anhängevorrichtung des Gerätes zwischen der Kupplungsvorrichtung an die Zugkupplung und dem Rahmen des Gerätes ein Hubgestänge mit einem motorischen Stellelement aufweist.

3. Anhängesystem nach einem oder mehreren der vorstehenden Ansprüche, **dadurch gekennzeichnet, dass** die Kupplung (16) zur Ankupplung der Anhängevorrichtung (16,17) des Gerätes (2) als Kugelkopfkupplung ausgebildet ist.

4. Anhängesystem nach Anspruch 1, **dadurch gekennzeichnet, dass** die Zugkupplung (6) auf dem Rahmen (3) des Zwischenfahrwerkes (1) in einem Abstandsverhältnis der Abstände zwischen Anhängekupplung (4) und Zugkupplung (6) zu Zugkupplung (6) und Laufradachse (7) der Laufräder (5) des Zwischenfahrwerkes (1) in etwa 1,5 : 1 beträgt.

5. Anhängesystem nach Anspruch 2, **dadurch gekennzeichnet, dass** die Zugkupplung auf dem Rahmen des Zugfahrzeuges in einem Abstandsverhältnis der Abstände zwischen Vorderachse und Zugkupplung zu Zugkupplung und Hinterachse des Zugfahrzeuges in etwa 1,5 : 1 beträgt.

6. Anhängesystem nach einem oder mehreren der vorstehenden Ansprüche, **dadurch gekennzeichnet, dass** das Hubgestänge (14) mit zwei unteren beabstandet zueinander angeordneten Gelenken (19) und einem oberen Gelenk (20) am Rahmen (8) des Gerätes (2) angeordnet ist.

7. Anhängesystem nach einem oder mehreren der vorstehenden Ansprüche, **dadurch gekennzeichnet, dass** das motorische Stellelement (15) als Hydraulikzylinder ausgebildet ist.

8. Anhängesystem nach einem oder mehreren der vorstehend genannten Ansprüche, **dadurch gekennzeichnet, dass** die Kupplung (16) zur Ankupplung der Anhängevorrichtung (17) des Gerätes (2) nicht werkzeuglos zur Trennung von Zwischenfahrwerk (1) und/oder Zugfahrzeug einerseits und landwirtschaftlichem Gerät (2) andererseits lösbar ist.
